# EUROPEAN PATENT APPLICATION

(11) **EP 3 312 047 A1**
(43) Date of publication of application: **25.04.2018**
(21) Application number: 17194699.9
(22) Date of filing: 04.10.2017
(51) Int. Cl.: B60N 2/00, B60N 2/28, G08B 21/00

(54) **SYSTEMS AND METHODS FOR REMOVABLE VEHICLE SEAT SENSOR**

(30) Priority: 04.10.2016 US 201662403960 P
(71) Applicant: Baby Trend, Inc., Ontario, CA 91761-4365 (US)
(72) Inventor: Mattarocci, Bradley James, Rancho Cucamonga, CA California 91739 (US)
(74) Representative: Roberts, Peter David

(57) **Abstract**

Methods and systems for detection of removable vehicle seats may be used to indicate presence or absence of a child in the vehicle. In some examples, an alarm system includes a radio frequency (RF) transceiver and a removable seat magnetic coupling. Various actions are triggered when the parent (e.g., guardian) goes beyond a predefined range while the removable seat is within the vehicle, such as sounding an alarm on a mobile electronic device.

## Description

### BACKGROUND

Children in car seats are often unable to self-extricate from their car seat. Caretakers occasionally overlook that a child is in a car seat when the caretaker leaves the car. This provides the potential for dangerous conditions to be brought upon the forgotten child. Also, consumer products occasionally are the subject of recalls for safety or other reasons. Current methods of informing owners when products they own are subject to a recall often rely on mass media to inform the public and hope that product owners come across the product recall in the news.

### SUMMARY

According to a first aspect of the invention there is provided a child car-seat proximity detection system, the system comprising a child car-seat, a communication circuit coupled to the child car-seat, the communication circuit configured to communicate with a first mobile electronic device and to generate a proximity indication, the proximity indication representative of a device distance between the child car-seat and the first mobile electronic device, and a device processor electrically coupled to the communication circuit, the device processor specifically programmed to receive the proximity indication from the communication circuit, determine, based on the proximity indication, that the device distance exceeds a maximum device distance threshold, generate a first abandonment alert at the first mobile electronic device, the alert indicating that the device distance exceeds the maximum device distance threshold; and when a threshold amount of time has passed since the generation of the first abandonment alert at the first mobile electronic device and the device distance continues to exceed the maximum device distance threshold, generating a second abandonment alert at a second electronic device.

Optionally, when a threshold amount of time has passed since the generation of the second abandonment alert at the second mobile electronic device and the device distance continues to exceed the maximum device distance threshold, sending a third abandonment alert to a public safety official.

The system may further include an indicator on the car seat that is detectable by the first mobile electronic device, wherein detection of the indicator causes the first mobile device to obtain software that provides for linking the first mobile device to the device processor.

Optionally, linking the first mobile device to the device processor provides for the first mobile device to receive safety information from a manufacturer of the system.

The system may further include an indicator on the car seat that is detectable by the first mobile electronic device, wherein detection of the indicator causes the first mobile device to obtain instructions regarding the operation of the system.

The device processor may be further specifically programmed to transmit a fourth abandonment alert to a vehicle alarm system to generate a vehicle alarm.

The system may further include an environmental sensor, wherein the environmental sensor generates an environmental measurement representative of an environmental condition, and the device processor is further specifically programmed to receive the environmental measurement, determine that the environmental measurement exceeds a maximum environmental measurement safety threshold, and generate an environment alert, the alert indicating that the child car-seat is exposed to the environmental condition and the environmental condition exceeds the maximum environmental measurement safety threshold.

The environmental measurement may be at least one of a humidity measurement and a temperature measurement.

The communication circuit may be further configured to communicate based on a wireless communication standard.

The wireless communication standard may be based on at least one of a BTLE standard, an IEEE 802.15.1 standard, and an IEEE 802.15.4 standard.

The device processor may be a microcontroller.

According to a second aspect of the invention there is provided a method for child car-seat proximity detection executing on a specifically programmed device processor coupled to the child car-seat, the method including obtaining a child car-seat having a communication circuit coupled to the child car-seat, the communication circuit configured to communicate with a first mobile electronic device and to generate a proximity indication, the proximity indication representative of a device distance between the child car-seat and the first mobile electronic device, generating a proximity indication representative of a device distance between the communication circuit and a first mobile electronic device, determining, based on the proximity indication, that the device distance exceeds a maximum device distance threshold, generating a first abandonment alert, the first abandonment alert indicating that the device distance exceeds the maximum device distance threshold, communicating the first abandonment alert to the first mobile electronic device, determining when a threshold amount of time has passed since the generation of the first abandonment alert at the first mobile electronic device and the device distance continues to exceed the maximum device distance threshold, and generating a second abandonment alert at a second electronic device responsive to determining that the threshold amount of time has passed since the generation of the first abandonment alert and that the device distance continues to exceed the maximum device distance threshold.

The method may further include transmitting the first abandonment alert to the first mobile electronic device via the communication circuit.

The method may further include generating an audible alert via an audible alert circuit.

The method may further include transmitting an alert to a vehicle alarm system to generate a vehicle alarm.

The proximity indication may include a received signal strength indicator (RSSI).

The method may further include generating an environmental measurement representative of an environmental condition via an environmental sensor, determining that the environmental measurement exceeds a maximum environmental measurement safety threshold, and generating an environment alert, the alert indicating that the removable object is attached to the base and that the environmental condition is unsafe.

The environmental measurement may be at least one of a humidity measurement and a temperature measurement.

The communication circuit may be configured to communicate based on a wireless communication standard.

The wireless communication standard may be based on at least one of a BTLE standard, an IEEE 802.15.1 standard, and an IEEE 802.15.4 standard.

### BRIEF DESCRIPTION OF THE DRAWINGS

FIG. 1 is a perspective view of a removable vehicle seat detection system, according to some embodiments.
FIGs. 2A-2B are block diagrams of a sensor proximity detection and notification system, according to some embodiments.
FIG. 3 is a perspective view of a child detection and mobile notification system, according to some embodiments.
FIG. 4 is a block diagram of an example child detection system, according to some embodiments.
FIG. 5 is a block diagram of a computer system to implement the child detection system, according to some embodiments.

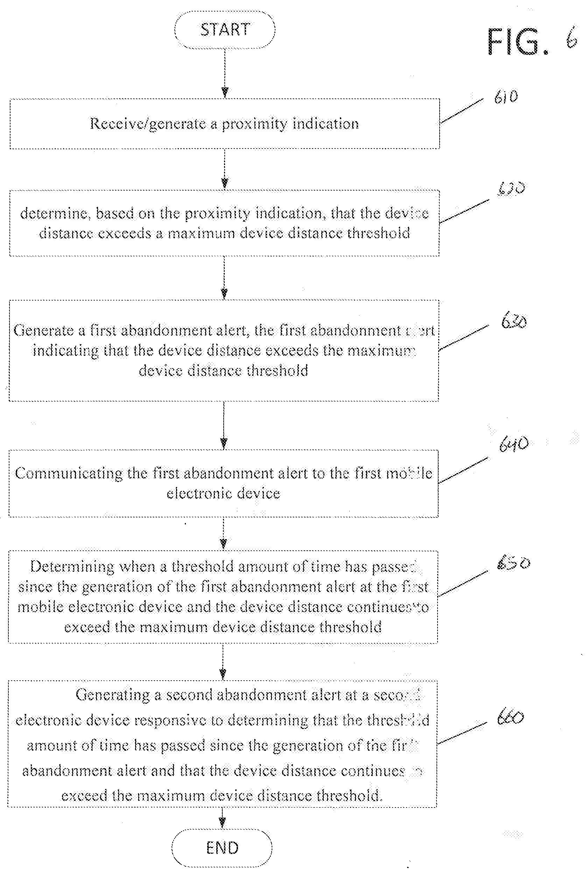

FIG. 6 is a flowchart of an alert escalation method, according to some embodiments.

### DETAILED DESCRIPTION

In the following description, reference is made to the accompanying drawings that form a part hereof, and in which is shown by way of illustration specific embodiments that may be practiced. These embodiments are described in sufficient detail to enable those skilled in the art to practice the invention, and it is to be understood that other embodiments may be used and that structural, logical, and electrical changes may be made without departing from the scope of the present invention. The following description of example embodiments is, therefore, not to be taken in a limited sense, and the scope of the present invention is defined by the appended claims.

The functions or algorithms described herein may be implemented in software or a combination of software and human implemented procedures in one embodiment. The software may consist of computer executable instructions stored on computer readable media such as memory or other type of storage devices. Further, such functions correspond to specifically programmed modules, which are software, hardware, firmware, or any combination thereof. Multiple functions may be performed in one or more modules as desired, and the embodiments described are merely examples. The software may be executed on a digital signal processor, ASIC, microprocessor, or other type of processor operating on a computer system, such as a personal computer, server, or other computer system. Described herein are methods and systems for detecting the presence of a child and alerting a caregiver of certain conditions. In one embodiment, the system includes an occupancy sensor circuit, a controller circuit, and a radio frequency (RF) communication circuit. In some embodiments, the transmitter communicates with a mobile electronic device, detects proximity to the device, and causes the mobile electronic device to generate an abandonment alert.

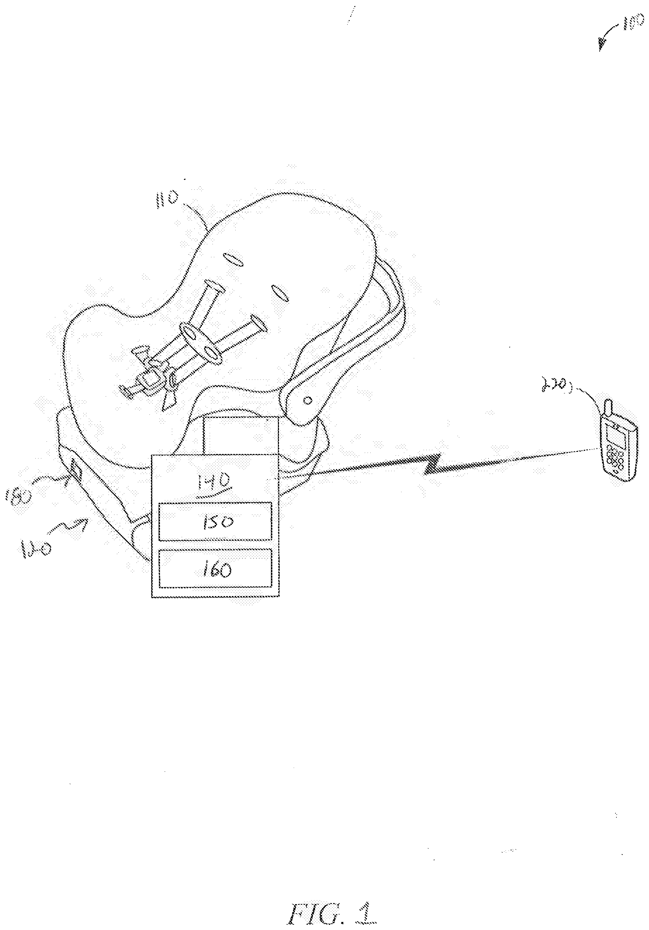

FIG. 1 is a perspective view of an embodiment of a child vehicle seat system 100. System 100 includes a removable seat 110 and seat base 120. The base 120 is installed in the vehicle and may remain in the vehicle. The removable seat 110 securely fastens to the base 120, and the seat 110 may be removed from the vehicle without removing a child from the seat 110. The system 100 includes a sensor device 140, where the sensor device 140 may be manufactured within the base 120 or attached to the base 120. Other embodiments are envisioned where sensor device 140 is separate from the base. Such embodiments have sensors in the vehicle generally, in the removable seat 110, or otherwise.

When used in removable vehicle seats, such as those designed for children, the sensor device 140 operates to determine if a child is within a vehicle. In one embodiment, the sensor 140 includes a magnetic detection sensor, such as a Hall effect sensor that outputs a voltage in response to a magnetic field. In one example, the sensor 140 generates a binary proximity signal to indicate whether the seat 110 is in sufficiently close proximity with the base 120, such as comparing a Hall effect sensor voltage against a minimum voltage threshold. Other examples use a load cell that measures weight. In some examples, the seat 110 must be snapped into the base 120 for the sensor 140 to provide a signal indicating the seat 110 is in sufficiently close proximity with the base 120. The proximity signal maybe used to determine if the removable seat 110 has been separated from the base 120, which may be used by system 100 to infer that a child in seat 110 is no longer within the vehicle. In one embodiment, the sensor 140 may include a magnetic reed switch that opens when the seat 110 is removed from the base 120.

The proximity sensor may include a capacitive sensor, Doppler effect sensor, eddy-current sensor, inductive sensor, laser rangefinder sensor, magnetic sensor, optical sensor, thermal infrared sensor, photocell sensor, radar sensor, ionizing radiation reflection sensor, sonar sensor, ultrasonic sensor, fiber optics sensor, or another proximity sensor.

FIG. 1 also shows a mobile electronic device 200, such as a smartphone. The sensor 140 includes a processor 150 and an RF communication circuit 160. In various examples, the sensor 140, via the RF circuit 160, transmits proximity signals to the mobile electronic device 200, to a vehicle computer system, or to another device. The RF circuit may transmit signals in accordance with a low power wireless transmission standard, such as Bluetooth Low Energy (BTLE), IEEE 802.15.1, IEEE 802.15 .4, or other standards. The RF circuit 260 may be paired with one or more of the mobile electronic device 200 or with a vehicle to establish such communications.

In some embodiments, the sensor 140 receives a raw sensor measurement, interprets the raw measurement as an estimated distance or binary proximity signal, formats the interpreted data, and transmits the formatted data. For example, a sensor measurement may include a voltage level received from a Hall effect sensor, and the voltage level may be compared against a voltage threshold to generate a binary magnetic proximity signal indicating that the seat 110 is securely fastened within the vehicle. In other embodiments, the sensor 140 receives and transmits the raw measurement to the device 200, and the device 200 interprets the raw measurement. In still other embodiments, the sensor 140 receives and interprets the raw measurement, and transmits both the raw measurement and the interpreted measurement to the device 200. The raw and interpreted measurements may be received by the processor 150 and converted into a data format that is compatible with the target device, such as using a data format compatible with an application running on the mobile device 200 or a data format compatible with a vehicle computer system.

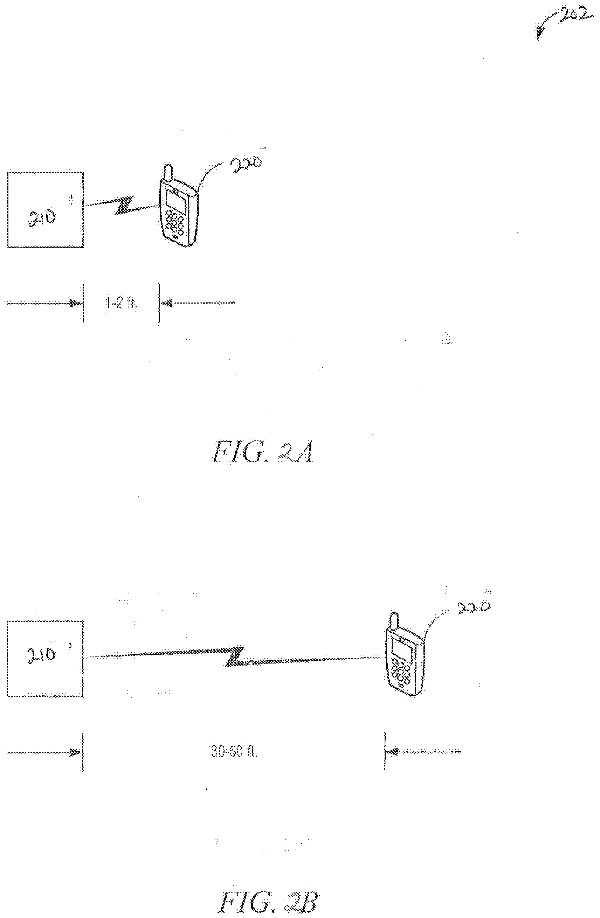

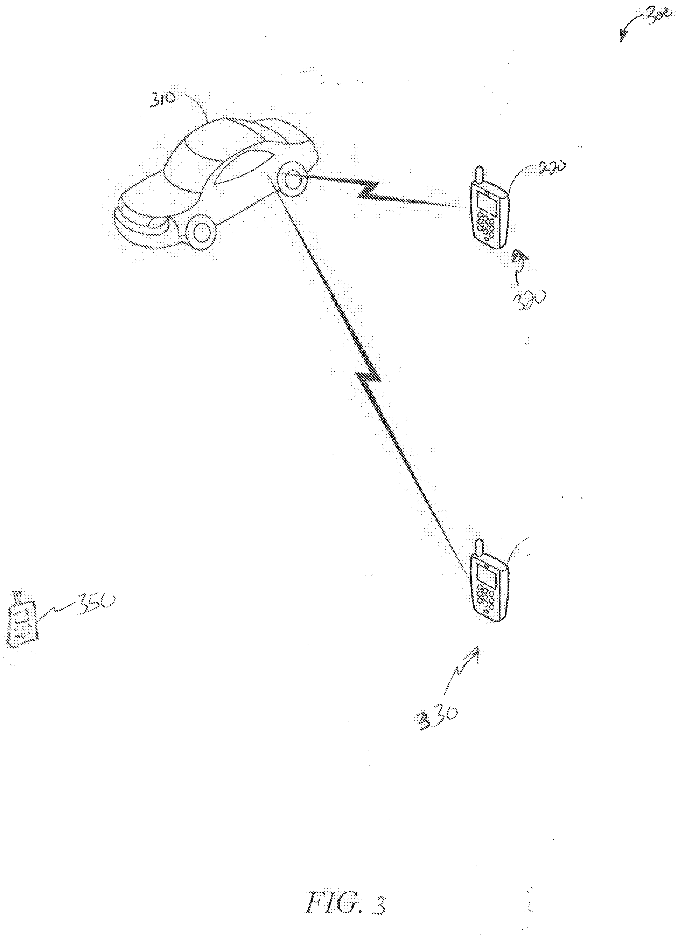

FIGs. 2A-2B are block diagrams of a sensor proximity detection and notification system 202, according to some embodiments. System 202 includes seat 210 and device 220, where seat 210 and device 220 may include proximity detection circuitry. FIG. 2A illustrates seat 210 and device 220, where the proximity detection circuitry determines that the seat 210 and the device 220 are separated by a distance of 1-2 feet. FIG. 3B illustrates seat 210 and device 220, where the proximity detection circuitry determines that the seat 210 and the device 220 are separated by a distance of 30-50 feet. Other distances may be used, and the distance may be extended in some embodiments using an RF power amplifier.

In some examples, the proximity detection circuitry includes an RF proximity sensor, and the RF proximity sensor generates an RF proximity signal. The RF proximity sensor generates the RF proximity signal based on a detected signal power, a received signal strength indicator (RSSI), or other RF signal characteristics. In some examples, presence or absence of an RF signal may be used alone or in combination with the RF proximity sensor to determine a binary RF proximity signal. In some examples, location information is used to determine an RF proximity, such as using GPS information, cellular tower triangulation, Wi-Fi access point triangulation, or other location information. For example, a sensor GPS location may be provided by the vehicle in which the seat 210 is installed, a device GPS location may be determined by device 220, and the location differences may be used to generate or improve accuracy of the RF proximity signal. In some examples, multiple radio or location sources may be combined to generate or improve distance determinations.

The RF proximity signal may include a binary RF proximity signal to indicate whether the seat 210 is in sufficiently close proximity with the device 220. For example, if the RSSI value falls below an RSSI threshold or if the signal power falls below a signal power threshold, a binary RF proximity signal may be generated to indicate that the device 220 has abandoned (e.g., gone out of range of) the seat 210. The RF proximity signal may include an approximate distance between the seat 210 and the device 220. The approximate distance may be grouped into two or more ranges, such as the 1-2 foot range shown in FIG. 2A or the 30-50 foot range shown in FIG. 2B, and an RF proximity alert (e.g., alarm) may be generated when there is a transition from a first range to a second range. The approximate distance may be monitored continually for a range trend. For example, successive range measurements may indicate that the distance between device 220 and seat 210 is increasing, which may indicate that the device 220 is moving away from the seat 210, and a binary RF proximity signal may be generated to indicate that the device 220 has abandoned the seat 210.

An RF proximity alert (e.g., alarm) may be generated to notify a user. The alert may include a visible alert, an audible alert, a tactile alert (e.g., vibration), a text or e-mail message, or other alert. In some examples, the device 220 may include a mobile device processor, where the processor is executing foreground or background software to generate a visible or audible alarm, and the device 220 may include speakers or other hardware or circuitry to generate the alarm. In some examples, the seat 210 may generate an alarm either using internal alarm circuitry or by sending the alert to a vehicle alarm system. One or more alarms may be used in combination to increase the probability that a user is notified.

In some embodiments, the RF proximity detection circuitry operates unidirectionally, such as seat 210 detecting an RF signal from device 220 and determining an RF proximity. This unidirectional operation may enable a proximity detection system where only a single proximity detection circuit is required. For example, the proximity detection circuit may be packaged and sold within the seat 210, and it may operate with any device 220 that emits an RF signal that can be detected by the proximity detection circuit on the seat 210. A unidirectional system may be used to generate a single alert on the device housing the proximity detection circuit, or may be used to generate and send a proximity alert from the proximity detection circuit device to another device. For example, when a range of 30-50 feet is detected by the seat 210, the seat 210 may send an alert to the device 220. In other embodiments, the proximity detection circuitry operates bidirectionally, and seat 210 and device 220 may receive RF signals from each other and independently determine RF proximities. This bidirectional operation may enable independent detection of proximity or independent generation of proximity alerts.

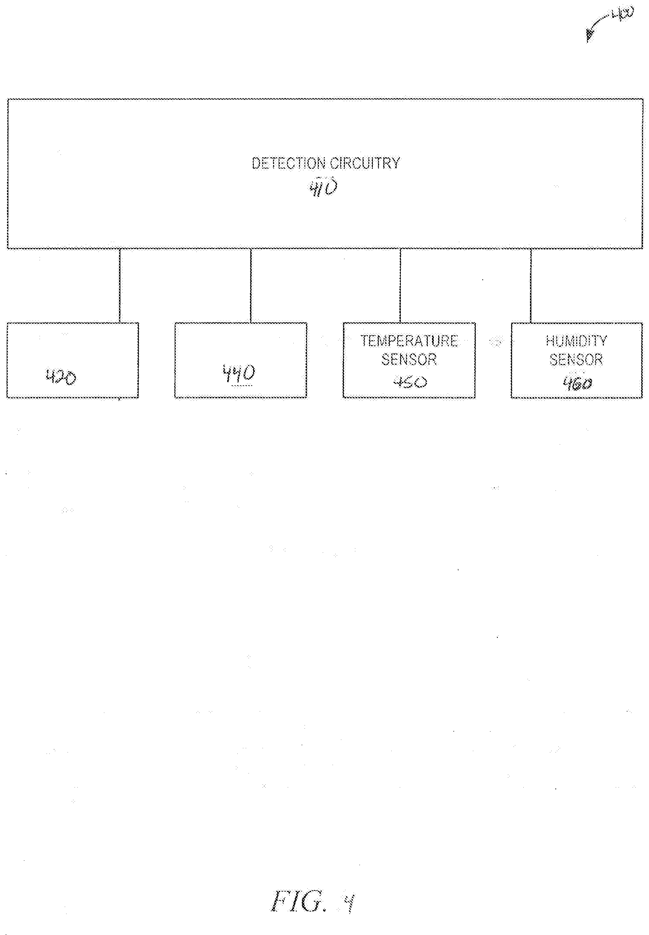

FIG. 3 is a perspective view of a removable seat detection and mobile notification system 300, according to some embodiments. System 300 includes a vehicle 310, where vehicle 310 includes the seat 110, base 120, and sensor 140 shown in FIG. 4. A proximity signal may be transmitted from vehicle 310 to mobile electronic device 220, where the proximity signal indicates that a removable vehicle seat (or child) is within vehicle 310. The proximity signal may be received by the mobile electronic device at a first device location 320. The first device location 320 may be in close proximity to the vehicle, such as when a user first exits a vehicle. The proximity signal may also be received by the mobile electronic device at a second location 330, where the second location 330 is further from the vehicle 310 than the first location 320. If the device 220 moves to second location 330 while the proximity signal indicates that the seat (or child) is within the car, then an abandonment alert is generated. In addition to the abandonment alert, system 300 may also alert a user of various combinations of proximities. For example, a minor vibration warning may be generated when a user first exits a vehicle, and a substantial abandonment alert may be generated if the user moves away from the vehicle while the removable seat is attached to the base. Still further, as discussed in further detail below, various detected distances between device 220 and vehicle 310 can also trigger alerts in other devices 350.

System 300 may use various vehicle features. A vehicle alarm system may be used to notify the user, such as honking the horn or flashing lights to indicate an abandonment alert. A vehicle equipped with a roadside emergency service system may contact the service to request help or to initiate a phone call with an operator to determine if a child is within the vehicle. A vehicle may also provide an indication of vehicle speed or movement, and system 300 may enter a reduced power (e.g., sleep) mode when the vehicle is moving. A vehicle may provide an environmental response to an abandonment alert, such as opening car windows or turning on air conditioning. A vehicle may also provide an environmental input, such as temperature, humidity, or other environmental measurement, such as the environmental sensors shown in FIG. 4.

FIG. 4 is a block diagram of a detection system 400, according to some embodiments. The system includes detection circuitry 410, where detection circuitry 410 may include a mobile device processor, a dedicated integrated circuit (I C), or other circuit. The detection circuitry 410 may receive magnetic proximity signals from a sensor 420. The detection circuitry 410 may receive RF proximity signals from RF circuitry 440, where the RF proximity signals indicate RF proximity between the RF proximity sensor 440 and an external mobile electronic device 220. The detection circuitry 410 may also use the RF circuitry 440 to communicate with the external mobile electronic device, including sending or receiving alerts or proximity information.

The detection circuitry 410 may also receive various other inputs, such as an input from a temperature sensor 450 or from a humidity sensor 460. The detection circuitry 410 may combine inputs from various sensors to generate various alerts. For example, detection circuitry 410 may use a sensor 420 input to determine that a removable vehicle seat is within a vehicle, and may warn a user when the temperature sensor 450 and humidity sensor 460 indicate an unsafe environment within a vehicle.

Components of the removable seat proximity detection system 400 may be implemented on two or more devices. In an example, a removable vehicle seat may be manufactured to include a detectable element, and a removable vehicle seat base may be manufactured to include the detection circuitry 410, sensor 420, RF circuitry 440, temperature sensor 450, and humidity sensor 460. In other embodiments, the RF circuitry 440, temperature sensor 450, or humidity sensor 460 may be implemented in a mobile electronic device, in a vehicle, or in another device.

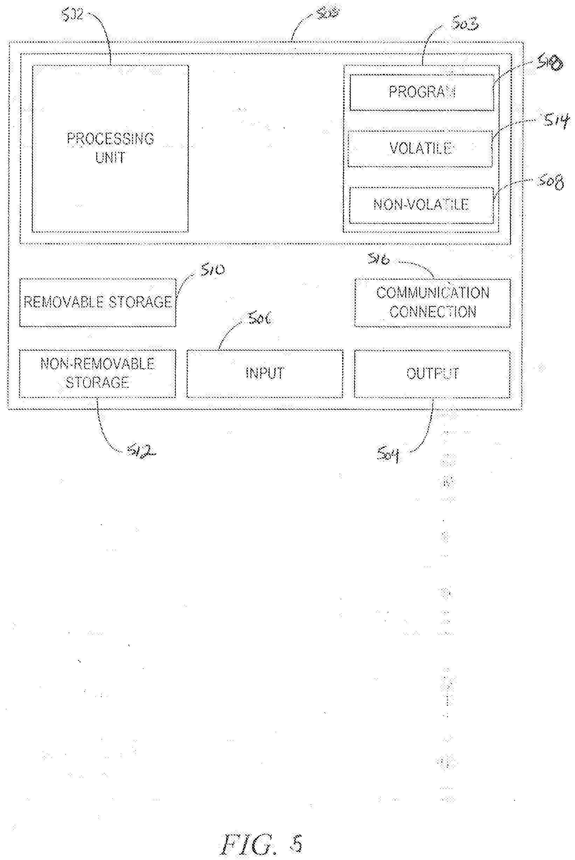

FIG. 5 is a block schematic diagram of a computer system 500 to implement removable seat detection system, according to some embodiments. The computer system 500 may use fewer components than shown in FIG. 5 in some embodiments to perform the methods described. One example computing device in the form of a computer 500, may include a processing unit 502, memory 503, removable storage 510, and non-removable storage 512. Memory 503 may include volatile memory 514 and non-volatile memory 508. Computer 500 may include- or have access to a computing environment that includes - a variety of computer-readable media, such as volatile memory 514 and non-volatile memory 508, removable storage 510 and nonremovable storage 512. Computer storage includes random access memory (RAM), read only memory (ROM), erasable programmable read-only memory (EPROM) & electrically erasable programmable read-only memory (EEPROM), flash memory or other memory technologies, compact disc read-only memory (CD ROM), Digital Versatile Disks (DVD) or other optical disk storage, magnetic cassettes, magnetic tape, magnetic disk storage or other magnetic storage devices, or any other medium capable of storing computer-readable instructions. Computer 500 may include or have access to a computing environment that includes input 506, output 504, and a communication connection 516. The computer may operate in a networked environment using a communication connection to connect to one or more remote computers, such as database servers. The remote computer may include a personal computer (PC), server, router, network PC, a peer device or other common network node, or the like. The communication connection may include a Local Area Network (LAN), a Wide Area Network (WAN) or other networks.

Computer-readable instructions stored on a computer-readable medium are executable by the processing unit 502 of the computer 500. A hard drive, CD-ROM, and RAM are some examples of articles including a non-transitory computer-readable medium. For example, a computer program 518 capable of providing a generic technique to perform access control check for data access and/or for doing an operation on one of the servers in a component object model (COM) based system may be included on a CD-ROM and loaded from the CD-ROM to a hard drive. The computer-readable instructions allow computer 700 to provide generic access controls in a COM based computer network system having multiple users and servers.

In one embodiment of operations, the system includes a removable object proximity detection system, the system comprising a detectable element attached to a removable object, a sensor attached to a base, the sensor configured to generate a proximity signal representative of a proximity between the removable object and the base, the removable object configured to be removably attached to the base, a radio frequency (RF) circuit, the RF circuit configured to communicate with a mobile electronic device and to generate an RF proximity indication, the RF proximity indication representative of a device distance between the RF circuit and the mobile electronic device, and a device processor electrically coupled to the sensor and to the RF circuit, the device processor specifically programmed to receive the proximity signal from the sensor, determine, based on the proximity signal, that the removable object is attached to the base, receive the RF proximity indication from the RF circuit, determine, based on the RF proximity indication, that the device distance exceeds a maximum device distance threshold, and generate an abandonment alert, the alert indicating that the removable object is attached to the base and that the device distance exceeds the maximum device distance threshold.

As discussed above, the RF circuit 160, and sensors 140 of the system more generally may be paired with one or more of mobile electronic devices 220, 350. In one embodiment, multiple mobile electronic devices are paired with the system. The ability to communicate with multiple devices allows escalation of alerts. By way of example, fist mobile device 220 would be associated with a primary caregiver and second mobile 350 device would be associated with a secondary caregiver. In such an example, upon receiving a proximity indication, block 610, and determining based thereon that a distance between a linked device and the car-seat is above a threshold, block 620, any alert(s) or signal(s) received or generated by the system, block 630, are first sent to the mobile device 220 associated with the primary caregiver, block 640. If no response is detected from the primary caregiver and/or the condition giving rise to the alert/signal persists for a threshold amount of time, block 650, the system proceeds to send and alert/signal to the mobile device 350 associated with the secondary caregiver, block 660, thereby escalating the alert. Such alert/signal takes the form of a phone call, a text message, or any other user-perceiveable indicia being provided to a mobile device.

In the event that no response continues to be detected from either the primary or the secondary caregiver such that the condition giving rise to the alert/signal persists, the system sends a signal to public safety officials, such as by dialing 911 or sending a text to 911. Such contact with public safety officials illustratively provides information that can be used to locate the vehicle/car seat. In one example, a message to public safety officials includes a description of the car, the nature of the conditions giving rise to the alert, and/or GPS coordinates of the car. In each described case, the system illustratively includes a timer and preset or adjustable timing is set for when each additional level of contact (primary caregiver, secondary caregiver, public safety) is to be implemented. Still further, such timing can be impacted based on other sensors present. By way of example, the detection of an elevated temperature within the vehicle can be used to lessen the time between one level or step of contact and another.

In one example at least one of seat 110, 210 and base 120 includes one or more indicator 180 thereon (Fig. 1). Illustratively, the indicator is a bar code, QR code, or other such indicia that can be interpreted by a computing device. In another embodiment, the indicator is an RFID chip that is able to be detected by mobile device 220, 320. By scanning the indicator, such as via a camera or RF reader within mobile device 220, 320, the mobile device 220, 320 is directed to obtain software (such as an application) to run on mobile device 220, 320. In addition to an application suitable for running on mobile device 220, 320, such indicator may direct a browser on mobile device 220, 320 to a user manual for the system and/or installation instructions. Still further, in one example, indicator 180 is provided that when interpreted by mobile device 220, 320 (such as by an application running thereon) the mobile device 220, 320 is paired with at least one of seat 110 and base 120 on which the indicator is located such that any alerts issued related thereto are sent to the mobile device 220, 320. In such a manner, the indicator serves to link the mobile device 220, 320 to the system.

In yet another example, scanning of an indicia on at least one of seat 110 and base 120 causes a warranty form or other form to auto-populate with product information such as a model number and/or serial number such that a user can easily register their product purchase. Still further, such scanning of indicia can register the at least one of seat 110 and base 120 and allow a manufacturer to link such at least one of seat 110 and base 120 with the mobile device 220, 320 scanning the indicia. As such, any notices relevant to the system can be sent to the mobile device 220, 320. Examples of such notices include safety reminders and recall notices.

While the above description has focused on car seats and car bases, the above concepts lend themselves to many implements in the child-care field. Indeed, for example, cribs, crib mattresses, play yards, bassinets, and strollers all have implementations that can make use of the presence detection and caregiver alert. Still further, having indicia thereon that provide ready access to applications, user manuals, and alerts for safety reminders and recall notices have applicability across childcare product lines.

## Claims

1. A child car-seat proximity detection system, the system comprising:
a child car-seat;
a communication circuit coupled to the child car-seat, the communication circuit configured to communicate with a first mobile electronic device and to generate a proximity indication, the proximity indication representative of a device distance between the child car-seat and the first mobile electronic device; and
a device processor electrically coupled to the communication circuit, the device processor specifically programmed to:
receive the proximity indication from the communication circuit;
determine, based on the proximity indication, that the device distance exceeds a maximum device distance threshold;
generate a first abandonment alert at the first mobile electronic device, the alert indicating that the device distance exceeds the maximum device distance threshold; and
when a threshold amount of time has passed since the generation of the first abandonment alert at the first mobile electronic device and the device distance continues to exceed the maximum device distance threshold, generating a second abandonment alert at a second electronic device.

2. The system of claim 1, wherein when a threshold amount of time has passed since the generation of the second abandonment alert at the second mobile electronic device and the device distance continues to exceed the maximum device distance threshold, sending a third abandonment alert to a public safety official.

3. The system of claim 1 or claim 2, further including an indicator on the car seat that is detectable by the first mobile electronic device, wherein detection of the indicator causes the first mobile device to obtain software that provides for linking the first mobile device to the device processor; wherein optionally
linking the first mobile device to the device processor provides for the first mobile device to receive safety information from a manufacturer of the system.

4. The system of any of claims 1 to 3, further including an indicator on the car seat that is detectable by the first mobile electronic device, wherein detection of the indicator causes the first mobile device to obtain instructions regarding the operation of the system; or
wherein the device processor is further specifically programmed to transmit a fourth abandonment alert to a vehicle alarm system to generate a vehicle alarm.

5. The system of any preceding claim, further including an environmental sensor, wherein the environmental sensor generates an environmental measurement representative of an environmental condition, and the device processor is further specifically programmed to:
receive the environmental measurement;
determine that the environmental measurement exceeds a maximum environmental measurement safety threshold; and
generate an environment alert, the alert indicating that the child car-seat is exposed to the environmental condition and the environmental condition exceeds the maximum environmental measurement safety threshold.

6. The system of claim 5, wherein the environmental measurement is at least one of a humidity measurement and a temperature measurement.

7. The system of any preceding claim, wherein the communication circuit is further configured to communicate based on a wireless communication standard, wherein optionally
the wireless communication standard is based on at least one of a BTLE standard, an IEEE 802.15.1 standard, and an IEEE 802.15.4 standard.

8. The system of any preceding claim, wherein the device processor is a microcontroller.

9. A method for child car-seat proximity detection executing on a specifically programmed device processor coupled to the child car-seat, the method including:
obtaining a child car-seat having a communication circuit coupled to the child car-seat, the communication circuit configured to communicate with a first mobile electronic device and to generate a proximity indication, the proximity indication representative of a device distance between the child car-seat and the first mobile electronic device
generating a proximity indication representative of a device distance between the communication circuit and a first mobile electronic device;
determining, based on the proximity indication, that the device distance exceeds a maximum device distance threshold;
generating a first abandonment alert, the first abandonment alert indicating that the device distance exceeds the maximum device distance threshold;
communicating the first abandonment alert to the first mobile electronic device;
determining when a threshold amount of time has passed since the generation of the first abandonment alert at the first mobile electronic device and the device distance continues to exceed the maximum device distance threshold, and
generating a second abandonment alert at a second electronic device responsive to determining that the threshold amount of time has passed since the generation of the first abandonment alert and that the device distance continues to exceed the maximum device distance threshold.

10. The method of claim 9, further including transmitting the first abandonment alert to the first mobile electronic device via the communication circuit.

11. The method of claim 9 or claim 10, further including generating an audible alert via an audible alert circuit.

12. The method of any of claims 9 to 11, further including transmitting an alert to a vehicle alarm system to generate a vehicle alarm; or
wherein the proximity indication includes a received signal strength indicator (RSSI).

13. The method of any of claims 9 to 12, further including:
generating an environmental measurement representative of an environmental condition via an environmental sensor;
determining that the environmental measurement exceeds a maximum environmental measurement safety threshold; and
generating an environment alert, the alert indicating that the removable object is attached to the base and that the environmental condition is unsafe.

14. The method of claim 13, wherein the environmental measurement is at least one of a humidity measurement and a temperature measurement.

15. The method of any of claims 9 to 14, wherein the communication circuit is configured to communicate based on a wireless communication standard, wherein optionally
the wireless communication standard is based on at least one of a BTLE standard, an IEEE 802.15.1 standard, and an IEEE 802.15.4 standard.
